# EUROPEAN PATENT APPLICATION

(11) **EP 4 759 512 A1**
(43) Date of publication of application: **17.06.2026**
(21) Application number: 24851877.1
(22) Date of filing: 07.08.2024
(51) Int. Cl.: B29C 49/78, G05B 19/05, G05B 19/042, G06F 3/14, G06F 8/34

(54) **DEVICE FOR ASSISTING WITH CREATION OF COMPUTER PROGRAM, METHOD FOR CREATING COMPUTER PROGRAM, TERMINAL DEVICE, AND BLOW MOLDING DEVICE**

(30) Priority: 07.08.2023 JP 2023128500; 16.10.2023 JP 2023178357
(71) Applicant: Nissei ASB Machine Co., Ltd., Komoro-shi, Nagano 384-8585 (JP)
(72) Inventor: KOMIYAMA, Sho, Komoro-shi, Nagano 384-8585 (JP); KONDO, Katsuki, Komoro-shi, Nagano 384-8585 (JP); SHIMIZU, Takuma, Komoro-shi, Nagano 384-8585 (JP)
(74) Representative: Novagraaf International SA
(86) International application number: PCT/JP2024/028232
(87) International publication number: WO 2025/033456

(57) **Abstract**

A device for assisting in creation of a computer program (33) for controlling operations of a blow molding apparatus (20) includes a processor (41) and a display (43). The processor (41) causes the display (43) to display a first screen (431) in which a user interface screen (261c) displayed on an interface device (261) for setting a control condition for each of a plurality of objects to be controlled in the blow molding apparatus (20) is displayed together with an identifier (431b) that specifies a position of an area for setting the control condition, and a second screen (432) in which a character string that indicates information designating an address space conforming to a predetermined platform-independent architecture and is referred to by the blow molding apparatus (20) to operate under the control condition is displayed in a state associated with the identifier (431b) and in a state able to be incorporated as a variable into a program code of the computer program (33).

## Description

### TECHNICAL FIELD

The present disclosure relates to a device that assists in creation of a computer program for controlling operations of a blow molding apparatus. The present disclosure also relates to a method for creating the computer program. The present disclosure also relates to a terminal device that performs at least one of control or management of operations of a blow molding apparatus based on the computer program, and the blow molding apparatus.

### BACKGROUND ART

Patent Document 1 discloses a blow molding apparatus for producing a hollow container made of resin. The apparatus includes an interface device for setting control conditions for each of a plurality of objects to be controlled.

### CITATION LIST

### PATENT LITERATURE

Patent Document 1: JP 7202309 B

### SUMMARY OF INVENTION

### TECHNICAL PROBLEM

In the manufacturing industry, there is a trend toward visualization and DX (monitoring and utilization of operation data and production data) of apparatuses and production lines, and the plastic industry is no exception. In the injection molding industry, a common data communication standard (EUROMAP conforming to OPC-UA) has been established, and environments in which visualization can be easily achieved are prepared for injection molding apparatuses of different manufacturers, accessories, and production lines constructed by these apparatuses and accessories.

On the other hand, in the blow molding industry, apparatus structures and the like differ greatly between manufacturers, and therefore a common data communication standard has not been established. However, visualization is also important in blow molding apparatuses in order to optimize productions and actively address plastic issues. In particular, a hot parison-type blow molding apparatus has many objects to be controlled (such as drive mechanisms and molding conditions) that need to be monitored (managed) or set, and the objects to be monitored may differ depending on customers or products, and thus flexibility (versatility) is also required for visualization. The blow molding apparatus includes an interface device for setting control conditions for each of a plurality of objects to be controlled. Thus, the interface device is required to make it possible to input or write data regarding control conditions from the outside so as to enhance the convenience of operation control environments (to flexibly perform visualization for the blow molding apparatus).

Further, it has been required to create a ladder diagram of a gate cutting device by another device (e.g., a PC) once and reinstall the ladder diagram in a controller of the blow molding apparatus. Accordingly, the timings of entry and retraction of the cutter mechanism and the like need to be changed, every time a lifting/lowering operation condition of a temperature adjusting mold or the like or a molding cycle time or the like changes, and therefore there is room for improvement in terms of improvement in workability in the work related to the creation and editing of the ladder diagram.

### SOLUTION TO PROBLEM

One of aspect examples of the present disclosure is an assisting device for assisting with creation of a computer program for controlling operations of a blow molding apparatus, the assisting device including:
a display; and
a processor, wherein
the processor causes the display to display
a first screen in which a user interface screen displayed on an interface device for setting a control condition for each of a plurality of objects to be controlled in the blow molding apparatus is displayed together with an identifier that specifies a position of an area for setting the control condition, and
a second screen in which a character string that indicates information designating an address space conforming to a predetermined platform-independent architecture and is referred to by the blow molding apparatus to operate under the control condition is displayed in a state associated with the identifier and in a state able to be incorporated as a variable into a program code of the computer program.

One of the aspect examples of the present disclosure is a method for creating a computer program for controlling operations of a blow molding apparatus, the method including:
causing a display to display a first screen in which a user interface screen displayed on an interface device for setting a control condition for each of a plurality of objects to be controlled in the blow molding apparatus is displayed together with an identifier that specifies a position of an area for setting the control condition;
causing the display to display a second screen in which a character string that indicates information designating an address space conforming to a predetermined platform-independent architecture and is referred to by the blow molding apparatus to operate under the control condition is displayed in a state associated with the identifier and in a state able to be incorporated as a variable into a program code of the computer program; and
incorporating the character string as the variable based on a command of a user.

One of the aspect examples of the present disclosure is a blow molding apparatus including a control device, wherein
the control device includes an interface device for setting a control condition for each of a plurality of objects to be controlled in the blow molding apparatus, and
the blow molding apparatus
includes an information storage device that stores
a user interface screen corresponding to first molding apparatus information including an identifier that specifies a position of an area for setting the control condition for the user interface screen to be displayed on the interface device, and reference information corresponding to second molding apparatus information including a character string that indicates information designating an address space conforming to a predetermined platform-independent architecture and is referred to by the blow molding apparatus to operate under the control condition, is associated with the identifier, and is allowed to be incorporated as a variable into a program code of a computer program for controlling operations of the blow molding apparatus, and
is allowed to transmit and receive the reference information corresponding to the second molding apparatus information that is linked to the first molding apparatus information.

According to the configuration of each of the aspect examples mentioned above, by visually specifying only the position of the area in the user interface screen where the control condition that requires attention is displayed, a user can specify a character string that indicates the information designating the address space and is referred to by the blow molding apparatus with regard to the control condition via the identifier assigned to the above position in the first screen. Since the character string is displayed in the second screen in a state where the character string can be incorporated into the program code of the computer program, the process including the creation of the program code into which the character string is incorporated can be performed by one-stop processing. This makes it possible to significantly improve the efficiency of the work of creating a computer program for causing the blow molding apparatus to perform desired operations, the work of changing the control conditions managed by the computer program, and the like. Thus, it is possible to flexibly and easily manage (monitor) the blow molding apparatus and the production line thereof, such as whether the blow molding apparatus is operating normally and whether correct molding conditions are maintained. Further, the control conditions of the blow molding apparatus can be easily changed from a remote place (outside the blow molding apparatus).

In comparison with an injection molding apparatus, the number of control conditions handled by a blow molding apparatus (particularly, a hot parison-type blow molding apparatus) is on the order of several hundreds to a thousand. Thus, the benefits of an address map function provided by the above-described assisting device can be significantly received. Accordingly, the convenience of operation control environments of the blow molding apparatus including the interface device for setting the control condition for each of the plurality of objects to be controlled can be improved.

Therefore, a terminal device including a controller configured to execute a computer program created by the above method and a communication interface configured to output commands for performing at least one of control or management of operations of the blow molding apparatus based on the computer program is also one of the aspect examples provided by the present disclosure.

In addition, a blow molding apparatus communicatively connected to the terminal device is also one of the aspect examples provided by the present disclosure. The blow molding apparatus includes a communication interface configured to receive the above-mentioned commands, and a controller configured to cause the blow molding apparatus to execute operations based on the commands. In addition, a blow molding apparatus according to another example includes an information storage device in which a user interface screen corresponding to first molding apparatus information and reference information corresponding to second molding apparatus information are stored. The blow molding apparatus can transmit and receive the reference information corresponding to the second molding apparatus information linked to the first molding apparatus information. Therefore, for example, the blow molding apparatus can transmit, to the terminal device, the reference information corresponding to the second molding apparatus information that is linked to the acquired first molding apparatus information. Thus, also with the blow molding apparatus discussed above, the efficiency of the work or the like of creating a computer program for causing the blow molding apparatus to perform desired operations can be significantly improved.

Further, one of the aspect examples provided by the present disclosure is a blow molding apparatus including a control device, wherein the control device includes a display and a controller,
the controller stores a computer program configured to edit and/or create a ladder diagram for performing operation control on an accessory that is electrically connectable to the blow molding apparatus, and
the controller causes the display to display a screen for editing and/or creating the ladder diagram when the computer program is executed by the controller.

According to the above configuration, the computer program configured to edit and/or create the ladder diagram for performing the operation control on the accessory that is electrically connectable to the blow molding apparatus is stored in the controller of the blow molding apparatus. When the computer program is executed by the controller, a screen for editing and/or creating the ladder diagram is displayed on the display of the blow molding apparatus. Thus, according to the blow molding apparatus having the above-described configuration, the user can edit and create the ladder diagram using the screen that is displayed on the display, thereby making it possible to improve the workability related to creating and editing of the ladder diagram.

### BRIEF DESCRIPTION OF DRAWINGS

FIG. 1 exemplifies a control system of a blow molding apparatus according to an embodiment.
FIG. 2 exemplifies a screen that is displayed on an interface device in FIG. 1.
FIG. 3 exemplifies a functional configuration of an assisting device in FIG. 1.
FIG. 4 exemplifies a first screen that is displayed on a display in FIG. 3.
FIG. 5 exemplifies a second screen that is displayed on the display in FIG. 3.
FIG. 6 illustrates an example of a display mode of the display in FIG. 3.
FIG. 7 illustrates another example of the display mode of the display in FIG. 3.
FIG. 8 exemplifies a screen that is displayed on the interface device in FIG. 1.
FIG. 9 illustrates an example of a sequence screen.

### DESCRIPTION OF EMBODIMENTS

Examples of embodiments will be described in detail below with reference to the accompanying drawings. In each drawing used for the description, the scale is changed as appropriate in order to make the constituent elements referred to have recognizable sizes.

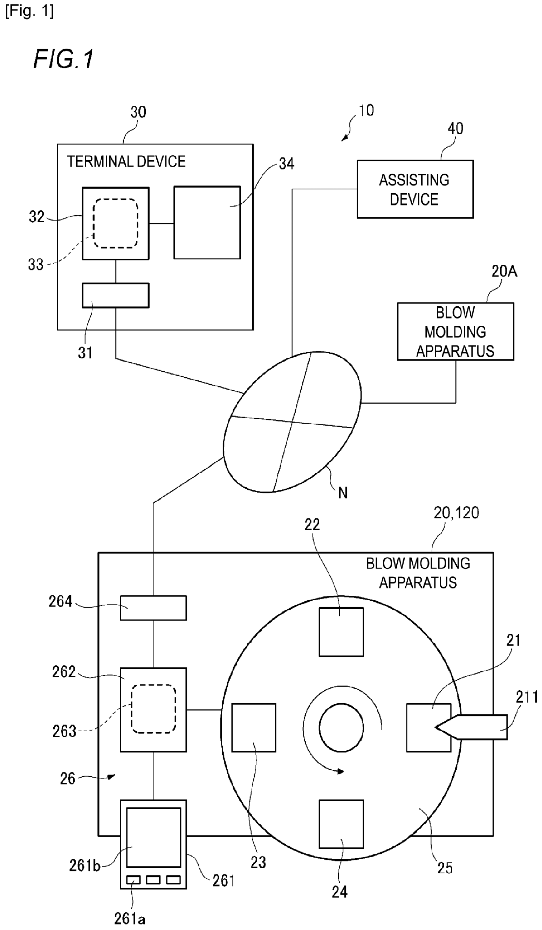

FIG. 1 exemplifies a control management system 10 according to an embodiment. The control management system 10 at least includes a blow molding apparatus 20 and a terminal device 30. The blow molding apparatus 20 and the terminal device 30 are connected to each other via a communication network N so as to be capable of bidirectional communication of data. The terminal device 30 is configured to transmit data for controlling operations of the blow molding apparatus 20, receive (acquire) data related to various controlled parameters in the blow molding apparatus 20, and the like.

In an example of the present embodiment, bidirectional communication of data is performed conforming to Open Platform Communication-Unified Architecture (OPC-UA). The OPC-UA is an international standard developed for reliable data exchange in the field of industrial automation and is an example of a platform-independent architecture.

The blow molding apparatus 20 is an apparatus configured to produce a hollow container made of resin. The blow molding apparatus 20 according to an example of the present embodiment has a configuration of a so-called hot parison-type. Specifically, the blow molding apparatus 20 includes an injection molding station 21, a temperature adjustment station 22, a blow molding station 23, a take-out station 24, and a conveyance mechanism 25. The blow molding apparatus 20 includes the same number of transfer plates as the number of stations. Each transfer plate is disposed at each station in an initial state.

The injection molding station 21 is configured to mold a preform with molten resin injected from an injection device 211. The conveyance mechanism 25 conveys the transfer plate disposed at the injection molding station 21 to the temperature adjustment station 22, thereby conveying the molded preform to the temperature adjustment station 22. At the same time, the transfer plate disposed at the take-out station 24 is conveyed to the injection molding station 21, and awaits the reception of a preform to be molded next.

The temperature adjustment station 22 is configured to bring the temperature of the conveyed preform to a predetermined value. The conveyance mechanism 25 conveys the transfer plate disposed at the temperature adjustment station 22 to the blow molding station 23, thereby conveying the temperature-adjusted preform to the blow molding station 23. At the same time, the transfer plate having been disposed at the injection molding station 21 is disposed at the temperature adjustment station 22, and the conveyed preform is subjected to temperature adjustment.

The blow molding station 23 is configured to perform blow molding on the conveyed preform so as to mold a container having a predetermined shape. The conveyance mechanism 25 conveys the transfer plate disposed at the blow molding station 23 to the take-out station 24, thereby conveying the blow-molded container to the take-out station 24. At the same time, the transfer plate having been disposed at the temperature adjustment station 22 is disposed at the blow molding station 23, and the conveyed preform is subjected to blow molding.

At the take-out station 24, the blow-molded container is taken out. The conveyance mechanism 25 conveys the transfer plate from which the container has been taken out to the injection molding station 21. At the same time, the transfer plate having been disposed at the blow molding station 23 is disposed at the take-out station 24, and the blow-molded container is ready to be taken out.

The blow molding apparatus 20 includes a control device 26. The control device 26 is configured to control a value of a controlled parameter at each station in addition to controlling the operations of the apparatus described above. Further, the control device 26 is configured to bidirectionally communicate with the terminal device 30 and the like while transmitting and receiving the values of control conditions (actually measured data, setting data, and operation data), production data, and the like.

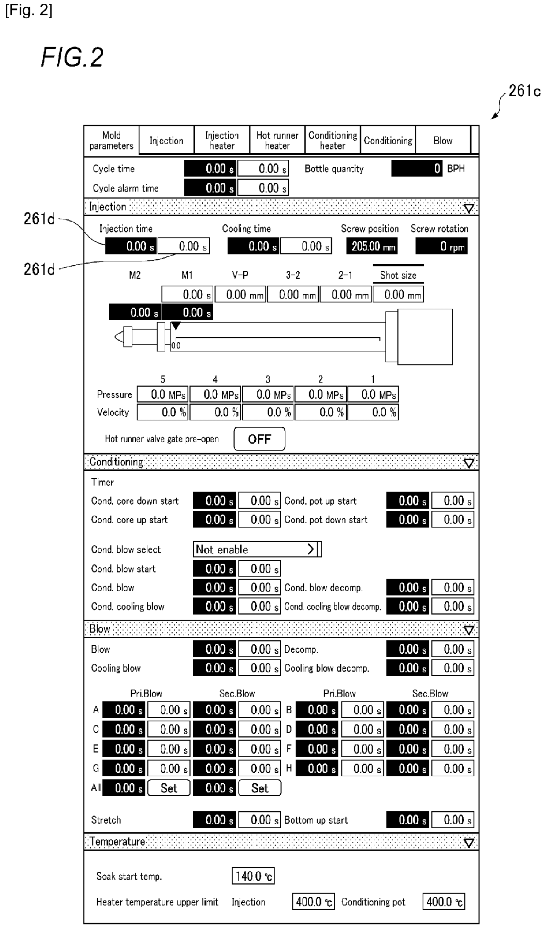

The control device 26 includes an interface device 261. The interface device 261 provides a user interface that receives operations for performing operation control on various drive mechanisms (actuators) included in the blow molding apparatus 20, operations for setting the values of various controlled parameters in the blow molding apparatus 20, and the like. The interface device 261 may include a button, a switch 261a, and the like. The button, the switch 261a, and the like may be implemented by a touch panel device. The interface device 261 may include a display 261b. The display 261b is configured to be able to display a user interface screen 261c illustrated in FIG. 2 as an example.

The user interface screen 261c presents the operation states of various drive mechanisms in the blow molding apparatus 20, the values of various controlled parameters, and the like. The user interface screen 261c according to the present example includes a plurality of display areas 261d. Each display area 261d is configured to display the values of various controlled parameters indicating the operation states of each of the injection molding station 21, the temperature adjustment station 22 and the blow molding station 23, and the like. The operation states and each of the values of the controlled parameters are examples of control conditions. The control device 26 includes an information storage device (not illustrated) that stores the values of various controlled parameters, and the values of the operation states in the blow molding apparatus 20.

Specifically, the values of the controlled parameters displayed in the plurality of display areas 261d include measured values and set values. The values displayed in white characters in the display area 261d with a black background are values actually measured in the blow molding apparatus 20. The values displayed in black characters in the display area 261d with a white background are values input by a user through the interface device 261 or the terminal device 30.

As exemplified in FIG. 1, the control device 26 includes a controller 262. The controller 262 is communicatively connected to the interface device 261 via a data bus. The controller 262 may be a programmable logic controller (PLC) that causes the blow molding apparatus 20 to perform the above-described operations based on the operations received by the interface device 261 and a computer program 263. The controller 262 (PLC) may include an information storage device.

The control device 26 includes a communication interface 264. The communication interface 264 is a hardware interface for transmitting and receiving data to and from the terminal device 30 via the communication network N. The communication interface 264 is communicatively connected to the controller 262 via a data bus.

The terminal device 30 includes a communication interface 31 and a controller 32. The communication interface 31 is communicatively connected to the controller 32 via a data bus. The communication interface 31 is a hardware interface for transmitting and receiving data to and from the blow molding apparatus 20 via the communication network N.

The controller 32 is configured to transmit, based on a computer program 33, data for causing the blow molding apparatus 20 to execute desired operations (transmission of various data to the terminal device 30, change of the molding conditions, and the like) through the communication interface 31. In addition, the controller 32 is configured to accept (receive) data transmitted from the blow molding apparatus 20 through the communication interface 31 based on the computer program 33. The terminal device 30 may include a database that accumulates the data received from the blow molding apparatus 20.

The terminal device 30 includes a display 34. The display 34 is connected to the controller 32 via a data bus. The display 34 is configured to display a screen (a graph or the like) by which the operation state of the blow molding apparatus 20, the state of the production line, and the like can be checked based on the received data. The same screen as the user interface screen 261c of the blow molding apparatus 20 may be displayed on the display 34.

As exemplified in FIG. 1, the control management system 10 includes an assisting device 40. The computer program 33 to be installed in the terminal device 30 can be created and provided using a program development environment of the assisting device 40. The program development environment can be implemented by an appropriate program editor application.

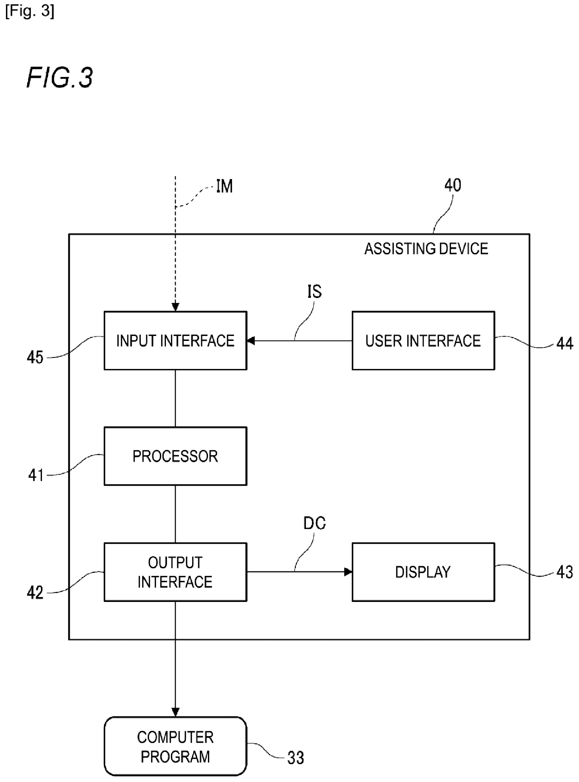

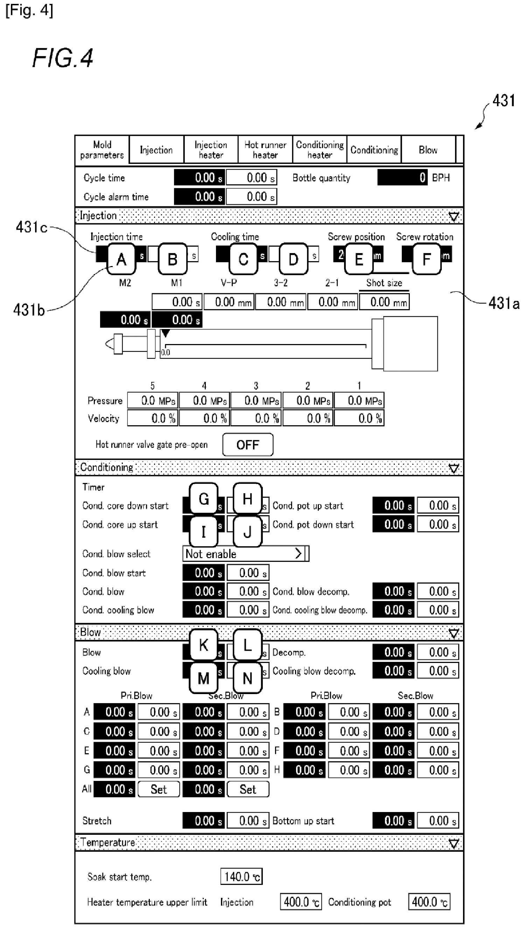

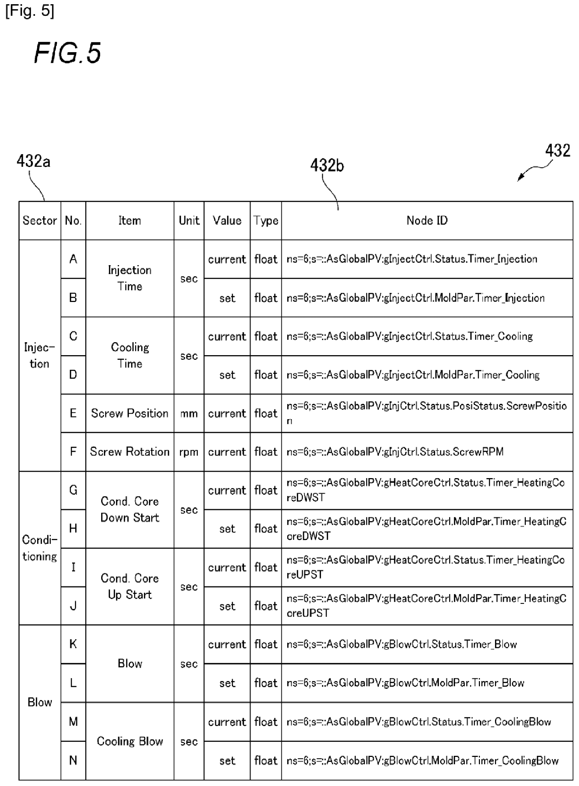

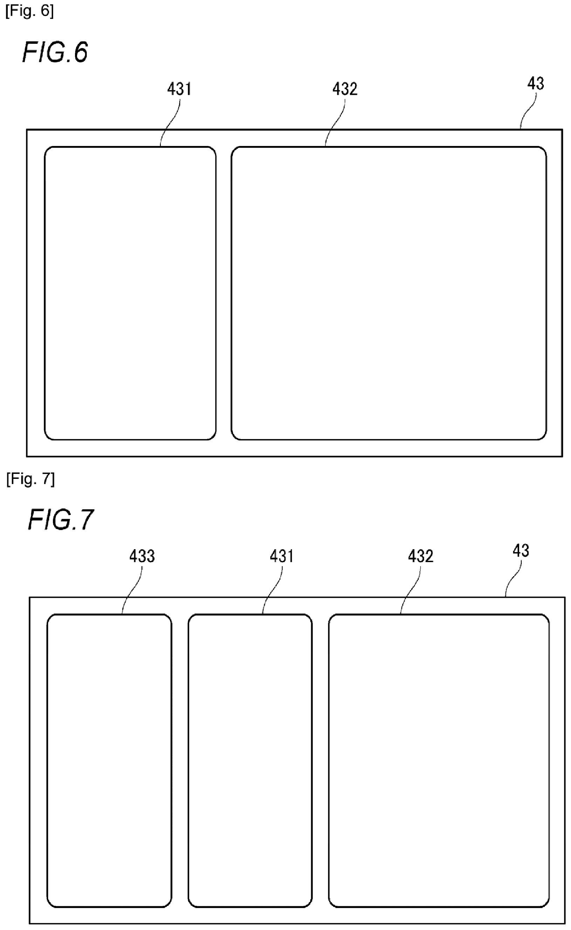

As exemplified in FIG. 3, the assisting device 40 at least includes a processor 41, an output interface 42, and a display 43. The processor 41 is configured to execute a program editor application. In addition, the processor 41 is configured to output, from the output interface 42, a display control signal DC for causing the display 43 to display a first screen 431 exemplified in FIG. 4 and a second screen 432 exemplified in FIG. 5. The first screen 431 can be rephrased as a first reference information group (first molding apparatus information) for transmitting and receiving the control conditions of the blow molding apparatus. The second screen 432 can be rephrased as a second reference information group (second molding apparatus information) for transmitting and receiving the control conditions of the blow molding apparatus. FIG. 6 illustrates an example of a mode in which the first screen 431 and the second screen 432 are displayed on the display 43. The first screen 431 (first reference information group, first molding apparatus information) and the second screen 432 (second reference information group, second molding apparatus information) may be stored in the assisting device 40, or may be stored in an information storage medium (a USB memory, disk medium, or the like) that is configured to be readable by the assisting device 40 and is independent of the assisting device 40.

The output interface 42 is configured as a hardware interface capable of outputting the display control signal DC. The display control signal DC may be an analog signal or a digital signal in accordance with the specifications of the display 43.

As is clear from the comparison with FIG. 2, the first screen 431 exemplified in FIG. 4 is a screen 431a imitating the user interface screen 261c of the blow molding apparatus 20, and at least displays a reference area 431c of the control condition and an identifier 431b for specifying a position thereof. In the present example, the position of each reference area 431c is specified by the identifier (reference sign) 431b assigned with any of alphabet characters A to N or numbers. In FIG. 4, the identifier 431b is given to only some of the reference areas 431c for the sake of good visibility. The first screen 431 is constituted by a plurality of screens, and the plurality of screens respectively correspond to the plurality of user interface screens 261c in the blow molding apparatus 20 on a one to-one basis. The plurality of reference areas 431c in each first screen 431 correspond to the plurality of display areas 261d of each user interface screen 261c on a one-to-one basis.

The second screen 432 illustrated in FIG. 5 as an example includes a table 432a. In the table 432a, a node ID 432b conforming to the OPC-UA is displayed so as to correspond one-to-one to the identifier 431b displayed in the first screen 431. The node ID 432b is a character string indicating information for designating an address space conforming to the OPC-UA that is referred to by the terminal device 30 and the blow molding apparatus 20. In the address space indicated by the node ID 432b, a value corresponding to the reference area 431c assigned with the identifier 431b in the first screen 431, that is, the value (control condition data) displayed in the display area 261d in the user interface screen 261c of the blow molding apparatus 20 is stored. The node ID 432b is incorporated as a variable from the terminal device 30 into the computer program 33 for causing the blow molding apparatus 20 to perform the desired operation.

For example, in the user interface screen 261c illustrated in FIG. 2, the measured value of the injection time of the molten resin is displayed in the display area 261d. When creating the computer program 33, which refers to the value displayed in the display area 261d, the user of the assisting device 40 pays attention to a position corresponding to the reference area 431c in the first screen 431 displayed on the display 43. As exemplified in FIG. 4, the identifier 431b assigned with "A" is displayed at the position mentioned above.

Subsequently, the user pays attention to a row in which the identifier 431b assigned with "A" is described in the table of the second screen 432 displayed on the display 43. As exemplified in FIG. 5, in the same row, as the node ID, a value (character string) of ns=6;s=::AsGlobalPV:gInjectCtrl.Status.Timer_Injection is described.

That is, the first screen 431 and the second screen 432 displayed on the display 43 of the assisting device 40 function as an address map that associates the position of the display area 261d, where the control condition of the user interface screen 261c is displayed, with the position in the address space in which the data related to the control condition is stored.

In the second screen 432, the character string of the node ID 432b is displayed in a state able to be incorporated as a variable into the computer program 33 to be created. Specifically, the character string can be copied and pasted into a program code created by the program editor application that is executed by the processor 41.

As exemplified in FIG. 3, the assisting device 40 includes a user interface 44. The user interface 44 is configured to receive operations for creating the computer program 33 and output instruction data IS corresponding to the operations. The user interface 44 may be implemented by a mouse, a keyboard, a touch panel device, and the like.

In the above example of creating the computer program 33, which references the value displayed in the display area 261d of the user interface screen 261c, the user is required to copy and paste the corresponding node ID 432b displayed in the second screen 432 into the program code being edited through the user interface 44.

The assisting device 40 includes an input interface 45. The input interface 45 is configured as a hardware interface capable of receiving the instruction data IS.

The processor 41 is configured to create the computer program 33 based on the instruction data IS received through the input interface 45 and output the created program from the output interface 42. When the assisting device 40 can communicate with the terminal device 30 via the communication network N, the computer program 33 output from the output interface 42 can be installed in the controller 32 of the terminal device 30 through the above communication. Alternatively, the computer program 33 output from the output interface 42 may be stored in an appropriate information storage medium. In this case, the computer program 33 is installed in the terminal device 30 via the information storage medium mentioned above.

With the assisting device 40 according to the example of the present embodiment, by visually specifying only a position of the area where the control condition that requires attention is displayed in the user interface screen 261c, the user can specify the node ID 432b designating an address space in which the data related to the control condition is stored via the identifier 431b assigned to the above position in the first screen 431. Since the node ID 432b is displayed in the second screen 432 in a state able to be incorporated into the program code of the computer program 33, the process including the creation of the program code into which the node ID 432b is incorporated can be performed by one-stop processing. This makes it possible to significantly improve the efficiency of the work of creating the computer program 33 for causing the blow molding apparatus 20 to perform desired operations, the work of correcting the computer program 33 when a control condition managed (monitored) by the terminal device 30 is changed, and the like. Further, the data of the control condition can be displayed on the display 34 by the computer program 33 created in the assisting device 40, and the monitoring of whether the blow molding apparatus 20 is normally operated or the like can be easily performed from a remote place. Furthermore, the control condition (the production quantity of containers per hour) or the like of the blow molding apparatus 20 can be easily changed from a remote place by the computer program 33 created in the assisting device 40.

The user interface screen 261c exemplified in FIG. 2 is only a small part of a large number of screens displayed on the interface device 261 for setting various control conditions. In comparison with the injection molding apparatus, the number of control conditions handled in the blow molding apparatus 20 is on the order of several hundreds to a thousand. Thus, the benefits of the address map function provided by the assisting device 40 can be significantly received. Accordingly, the convenience of operation control environments of the blow molding apparatus 20 including the interface device 261 for setting the control condition for each of the plurality of objects to be controlled can be improved.

The node ID is compliant with the UPC-UA, which is a platform-independent architecture and is increasingly used in the field of industrial automation. Therefore, a highly versatile program development environment can be provided in which restrictions on vendors and models of the blow molding apparatus 20 and the terminal device 30 constituting the control management system 10 are alleviated.

When the assisting device 40 can communicate with the blow molding apparatus 20, as exemplified in FIG. 3, the input interface 45 may be configured to be able to receive image data IM corresponding to the user interface screen 261c displayed on the interface device 261 of the blow molding apparatus 20.

In this case, the processor 41 is configured to output, from the output interface 42, the display control signal DC for causing the display 43 to display a third screen 433 in addition to the first screen 431 and second screen 432 based on the image data IM, as exemplified in FIG. 7. The third screen 433 corresponds to the actual user interface screen 261c displayed on the interface device 261 of the blow molding apparatus 20. The third screen 433 may reflect the state of the user interface screen 261c in real time, or may be a screen-shot at a specific time point.

According to such a configuration, the user of the assisting device 40 can select the variables to be incorporated into the computer program 33 with reference to the first screen 431 and the second screen 432 while checking the states and numerical values related to various control conditions in the third screen 433 of the blow molding apparatus 20 in operation. This makes it possible to provide a highly convenient program development environment. The terminal device 30 may have a function equivalent to the function of the assisting device 40. That is, the computer program 33 may be created by referring to the first screen 431 (the first reference information group, the first molding apparatus information) and the second screen 432 (the second reference information group, the second molding apparatus information) by the terminal device 30.

Each of the controller 262 of the blow molding apparatus 20, the controller 32 of the terminal device 30, and the processor 41 of the assisting device 40 having the various functions described above may be implemented by a general-purpose microprocessor that operates in cooperation with a general-purpose memory. Examples of the general-purpose microprocessor may include a CPU, an MPU, and a GPU. Examples of the general-purpose memory may include a ROM and a RAM. In this case, the ROM may store a computer program for implementing the functions mentioned above. The general-purpose microprocessor designates at least part of the computer program stored in the ROM, loads the designated computer program on the RAM, and executes the above-described processing in cooperation with the RAM.

Each of the controller 262, the controller 32, and the processor 41 may be implemented by a dedicated integrated circuit, such as a micro-controller, an ASIC, or an FPGA, which is capable of executing a computer program for implementing the functions. In this case, the computer program is preinstalled in a storage element included in the dedicated integrated circuit. Each of the controller 262, the controller 32, and the processor 41 may be implemented by a combination of a general-purpose microprocessor and a dedicated integrated circuit.

### Variation of User Interface Screen

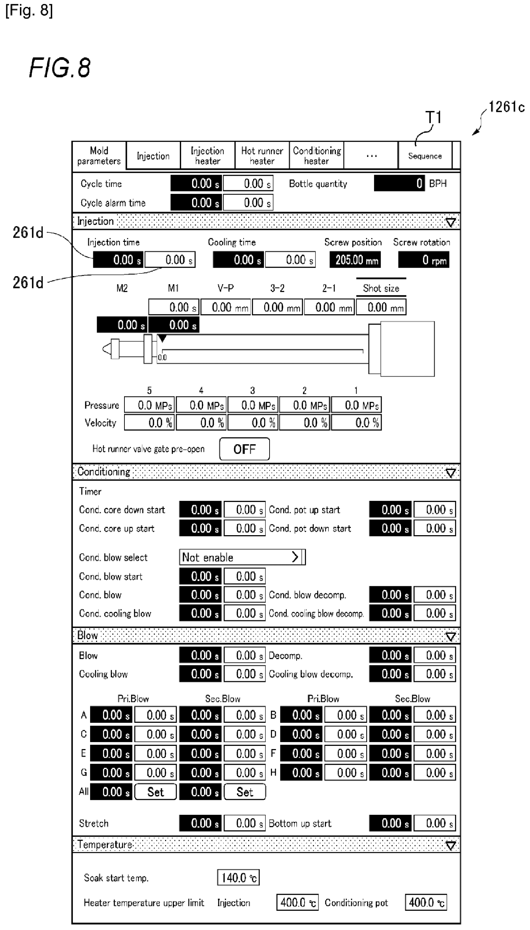

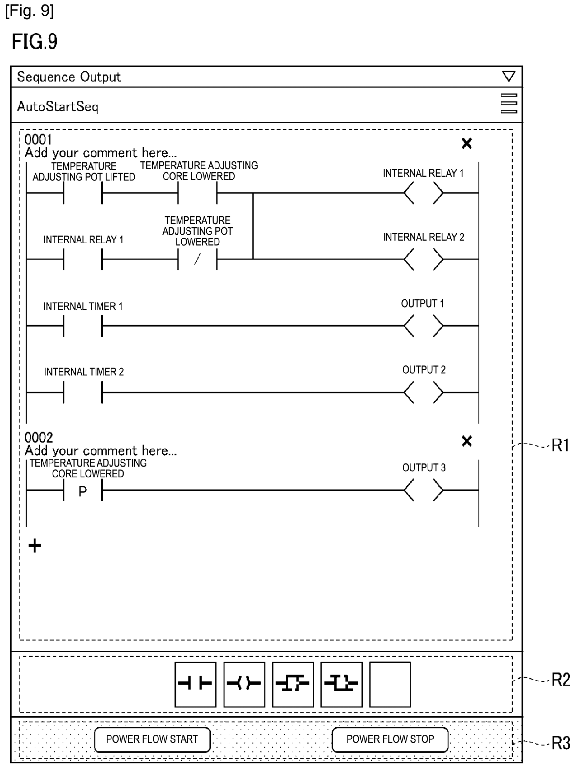

A blow molding apparatus 120 (see FIG. 1) according to a variation will be described with reference to FIG. 8 and FIG. 9. The present variation is different from the blow molding apparatus 20 in that a user interface screen 1261c is displayed on the display 261 b of the control device 26 instead of the user interface screen 261c. In other points, the blow molding apparatus 120 is basically the same as the blow molding apparatus 20, and therefore the description of the same portions will be omitted. In the blow molding apparatus 120 according to the present variation, it is possible to create and/or edit a computer program capable of editing and/or creating a ladder diagram (ladder program) for performing operation control on an accessory that is electrically connectable to the blow molding apparatus 120. The computer program is stored in the blow molding apparatus 120, and the computer program is executed by the control device 26.

Such an accessory is, for example, a gate cutting device including a cutter mechanism configured to cut off a gate portion (a mark of a resin path protruding from the bottom) formed on the bottom of the preform. The gate cutting device is electrically connected to the blow molding apparatus 120 at the temperature adjustment station 22. The cutting of the gate portion with the gate cutting device is performed by causing the cutter mechanism to enter the bottom side of the preform supported by a neck mold when two temperature adjusting molds (a temperature adjusting pot mold that accommodates the preform and a temperature adjusting core mold that is inserted into the preform) of the temperature adjustment station 22 are in a mold opening state, and retracting the cutter mechanism after the gate portion being cut off. Note that the cutting of the gate portion with the gate cutting device may be performed by a method in which, when the temperature adjusting molds are in a mold closing state (at the temperature adjusting time of the preform), the cutter mechanism is made to enter a portion immediately below the temperature adjusting pot mold at a lifted position and is retracted, whereby the gate portion protruding from the lower portion of the temperature adjusting pot mold is cut off.

In the present variation, a case where the gate cutting device (an example of the accessory) is electrically connected to the blow molding apparatus 120 at the temperature adjustment station 22 and a ladder diagram of the gate cutting device is edited and/or created will be described as an example. As exemplified in FIG. 8, a plurality of tabs displayed in the user interface screen 1261c include a tab T1 (a tab displayed as "Sequence") for displaying a sequence screen for editing and/or creating a computer program capable of editing and/or creating a ladder diagram of operation control of the gate cutting device. Each tab is a tab for displaying a screen for setting operation conditions of various drive devices and various molding conditions in each molding step of the blow molding apparatus 120.

When the tab T1 is selected, the control device 26 displays a sequence screen exemplified in FIG. 9 on the display 261b. The sequence screen includes a first region R1 for displaying the entire ladder diagram in a displayable, creatable, and editable manner, a second region R2 for displaying necessary ladder logic symbols in a selectable manner, and a third region R3 for displaying switch buttons for operation check of the ladder diagram. Note that, however, the sequence screen is only required to at least include the first region R1 and the second region R2, and does not need to include the third region R3.

### Creation and Edit of Ladder Diagram

When creating a ladder diagram, the user selects a ladder logic symbol in the second region R2 by a touch operation and moves the selected ladder logic symbol to an appropriate site in the first region R1 by a slide operation. When deleting an unnecessary ladder logic symbol in the first region R1, the user slides the unnecessary ladder logic symbol to the outside of the first region R1. Further, when editing the ladder diagram, the user reads in the ladder program already stored in the controller 262 and partially corrects the ladder logic symbol present in the first region R1.

In the related art, a ladder diagram of the gate cutting device is created once by another device (e.g., a PC), and the created ladder diagram needs to be reinstalled in the controller 262 of the blow molding apparatus 120. Accordingly, the timings of entry and retraction of the cutter mechanism and the like need to be changed, every time a lifting/lowering operation condition of a temperature adjusting mold or the like or a molding cycle time or the like changes, and therefore there is room for improvement in terms of improvement in workability in the work related to the creation and editing of the ladder diagram. In the blow molding apparatus 120 according to the present variation, as exemplified in FIG. 8, the tab T1 for displaying a sequence screen where a ladder diagram of an accessory can be created and/or edited is provided in the user interface screen 1261c. When the user selects the tab T1, the sequence screen exemplified in FIG. 9 is displayed; accordingly, by using the blow molding apparatus 120, the workability related to the creation and/or edit of the ladder diagram of the accessory can be significantly improved.

### Operation Check of Ladder Diagram

When a gate cutting device is coupled to a one-step machine of a four-station type, since the operation of the gate cutting device is substantially the same, the operation control thereof is also substantially the same, whereby it is only required to change the timings of entry and retraction of the cutter mechanism in many cases. In the present variation, it is possible to read in the ladder diagram already created on the user interface screen 1261c of the blow molding apparatus 120 in order to only adjust (edit) a symbol (an example of the ladder logic symbol) related to the timer in accordance with molding conditions and the like, thereby bringing a high convenience.

As exemplified in FIG. 9, the sequence screen according to the present variation includes the third region R3, in which the switch buttons for operation check of the ladder diagram are displayed. The user performs the touch operation on the switch button (the button on which "POWER FLOW START" is displayed) for operation check so as to activate the operation check, whereby the user can check to which part of the ladder diagram the control has progressed, whether the gate cutting device is in operation adequately, and the like while watching the actual devices. After the above check is completed, the touch operation is performed on the switch button for operation check ("the button on which POWER FLOW STOP is displayed") to stop this function. In this way, the user can perform operation check of the ladder diagram.

When the gate cutting device does not operate at an adequate timing, the gate cutting device may come into contact with the temperature adjusting mold and damage the temperature adjusting mold. However, at present, there is no one-step machine (hot parison-type blow molding machine) that can create and/or edit a ladder diagram for an accessory directly on the blow molding apparatus 120. In the present variation, as exemplified in FIG. 8, the tab T1 is included in the user interface screen 1261c displayed on the display 261b of the control device 26 provided in the blow molding apparatus 120. When the user selects the tab T1, the sequence screen exemplified in FIG. 9 is displayed, and thus the ladder diagram for the accessory can be created and edited directly on the blow molding apparatus 120. Accordingly, the blow molding apparatus 120 according to the present variation is useful for improving the efficiency of industrial equipment, promoting the adoption of IT, and the like.

The configurations described above are merely examples for facilitating the understanding of the present disclosure. Each configuration example can be appropriately changed or combined with another configuration example without departing from the gist of the present disclosure.

In the above embodiment example, the assisting device 40 is provided as a device independent of the terminal device 30. However, the assisting device 40 may be part of the functions provided by the terminal device 30. In this case, the first screen 431, the second screen 432, and the third screen 433 may be displayed on the display 34. The computer program 33 may be created in the terminal device 30.

In the above embodiment example, the hot parison-type blow molding apparatus 20 is exemplified. The hot parison-type (one-step type) blow molding apparatus has a particularly large number of controlled parameters, and therefore the benefits of the address map function provided by the assisting device 40 are particularly noticeable. However, the control management system 10 may include a blow molding apparatus called a cold parison type (two-step type) or a cool parison type (1.5-step type).

The blow molding apparatus 20 may include an information storage device that stores the user interface screen 261c corresponding to the first molding apparatus information and the reference information corresponding to the second molding apparatus information. The information storage device may be part of a PLC. The first molding apparatus information is information including the identifier that specifies the position of the area for setting the control conditions for the user interface screen 261c to be displayed on the interface device 261. The second molding apparatus information is a character string (node ID) indicating information designating an address space conforming to a predetermined platform-independent architecture referred to by the blow molding apparatus 20 to operate under the control conditions, and is information including a character string that is associated with the identifier and can be incorporated as a variable into a program code of a computer program for controlling the operations of the blow molding apparatus 20. The first molding apparatus information and the second molding apparatus information are stored in, for example, an information storage medium, the assisting device 40, or the terminal device 30. In this case, the blow molding apparatus 20 can transmit and receive the reference information corresponding to the second molding apparatus information linked to the first molding apparatus information. Examples of such reference information include the values of the control conditions (actually measured data, setting data, and operation data) and the production data stored in the areas corresponding to the node ID (ns=6;s=::AsGlobalPV:gInjectCtrl.Status.Timer_Injection) described in a row in which the identifier assigned with "A" is described. The blow molding apparatus 20 may be communicatively connected to the terminal device 30 configured to output commands for performing at least one of control or management of the operations of the blow molding apparatus 20 to the blow molding apparatus 20 based on the computer program 33 for controlling the operations of the blow molding apparatus 20. In this case, for example, the user of the assisting device 40 or the terminal device 30 performs correction work on the computer program 33 by using the reference information corresponding to the second molding apparatus information linked to the first molding apparatus information. When the computer program 33 is corrected, the terminal device 30 transmits a command based on the corrected computer program 33 to the blow molding apparatus 20. Then, the communication interface 264 included in the control device 26 receives the command from the terminal device 30. When the command is received, the controller 262 of the control device 26 causes the blow molding apparatus 20 to perform the operation based on the command. Therefore, the above-described blow molding apparatus 20 can also provide a highly convenient program development environment.

Further, as exemplified in FIG. 1, the control management system 10 may include another blow molding apparatus 20A capable of communicating with the terminal device 30 in conformity with the OPC-UA, and an accessory. The blow molding apparatus 20A may be the same apparatus type as the blow molding apparatus 20 or may be a different apparatus type from each other. When the blow molding apparatus 20A is a different apparatus type from the blow molding apparatus 20, an adequate computer program different from the computer program 33 may be created by the assisting device 40 based on the method described above.

The node ID 432b of the OPC-UA displayed in the second screen 432 may be replaced with an appropriate character string that designates an address space referred to by the blow molding apparatus 20 in the platform-independent architecture.

This application is based on Japanese Patent Application (JP 2023-128500) filed on Aug. 7, 2023 and Japanese Patent Application (JP 2023-178357) filed on Oct. 16, 2023, the contents of which are incorporated herein by reference.

### REFERENCE SIGNS LIST

20, 120: Blow molding apparatus, 261: Interface device, 261a: Switch, 261b: Display, 261c, 1261c: User interface screen, 261d: Display area, 30: Terminal device, 32: Controller, 33: Computer program, 40: Assisting device, 41: Processor, 43: Display, 431: First screen, 431b: Identifier, 431c: Reference area, 432: Second screen, 432b: Node ID, 433: Third screen, R1: First region, R2: Second region, R3: Third region, T1: Tab

## Claims

1. An assisting device for assisting with creation of a computer program for controlling operations of a blow molding apparatus, the assisting device comprising:
a display; and
a processor, wherein
the processor causes the display to display
a first screen in which a user interface screen displayed on an interface device for setting a control condition for each of a plurality of objects to be controlled in the blow molding apparatus is displayed together with an identifier that specifies a position of an area for setting the control condition, and
a second screen in which a character string that indicates information designating an address space conforming to a predetermined platform-independent architecture and is referred to by the blow molding apparatus to operate under the control condition is displayed in a state associated with the identifier and in a state able to be incorporated as a variable into a program code of the computer program.

2. The assisting device for assisting with creation of a computer program according to claim 1, wherein
the information is a node ID conforming to OPC-UA.

3. The assisting device for assisting with creation of a computer program according to claim 1 or 2, wherein
the processor causes the display to display a third screen that displays the user interface screen displayed on the interface device.

4. A method for creating a computer program for controlling operations of a blow molding apparatus, the method comprising:
causing a display to display a first screen in which a user interface screen displayed on an interface device for setting a control condition for each of a plurality of objects to be controlled in the blow molding apparatus is displayed together with an identifier that specifies a position of an area for setting the control condition;
causing the display to display a second screen in which a character string that indicates information designating an address space conforming to a predetermined platform-independent architecture and is referred to by the blow molding apparatus to operate under the control condition is displayed in a state associated with the identifier and in a state able to be incorporated as a variable into a program code of the computer program; and
incorporating the character string as the variable based on a command of a user.

5. The method for creating a computer program according to claim 4, wherein
the information is a node ID conforming to OPC-UA.

6. A terminal device, comprising:
a controller configured to execute the computer program created by the method according to claim 4 or 5; and
a communication interface configured to output a command for performing at least one of control or management of operations of the blow molding apparatus based on the computer program.

7. A blow molding apparatus that is communicatively connected to the terminal device according to claim 6, the apparatus comprising:
a communication interface configured to receive the command; and
a controller configured to cause the blow molding apparatus to execute operations based on the command.

8. A blow molding apparatus comprising a control device, wherein
the control device includes an interface device for setting a control condition for each of a plurality of objects to be controlled in the blow molding apparatus, and
the blow molding apparatus
includes an information storage device that stores
a user interface screen corresponding to first molding apparatus information including an identifier that specifies a position of an area for setting the control condition for the user interface screen to be displayed on the interface device, and
reference information corresponding to second molding apparatus information including a character string that indicates information designating an address space conforming to a predetermined platform-independent architecture and is referred to by the blow molding apparatus to operate under the control condition, is associated with the identifier, and is allowed to be incorporated as a variable into a program code of a computer program for controlling operations of the blow molding apparatus, and
is allowed to transmit and receive the reference information corresponding to the second molding apparatus information that is linked to the first molding apparatus information.

9. The blow molding apparatus according to claim 8, wherein
the blow molding apparatus is communicatively connected to a terminal device configured to output a command for performing at least one of control or management of operations of the blow molding apparatus to the blow molding apparatus based on a computer program for controlling the operations of the blow molding apparatus.

10. A blow molding apparatus comprising a control device, wherein
the control device includes a display and a controller,
the controller stores a computer program configured to edit and/or create a ladder diagram for performing operation control on an accessory that is electrically connectable to the blow molding apparatus, and
the controller causes the display to display a screen for editing and/or creating the ladder diagram when the computer program is executed by the controller.
